# FASCICULE DE BREVET EUROPEEN

(11) **EP 0 857 448 B1**
(45) Date de publication et mention de la délivrance du brevet: **14.05.2003**
(21) Numéro de dépôt: 98400202.2
(22) Date de dépôt: 30.01.1998
(51) Int. Cl.: A47J 37/07

(54) **Grille de cuisson à panneaux articulés**
Grillrost aus scharnierartig verbundenen Rostelementen
Grill grid consisting of hinged sections

(30) Priorité: 06.02.1997 FR 9701355
(43) Date de publication de la demande: 12.08.1998
(73) Titulaire: SEB S.A., 69130 Ecully (FR)
(72) Inventeur: Betend-Bon, Alain, 74000 Annecy (FR)
(74) Mandataire: Keib, Gérard

(56) Documents cités:
- DE-A- 3 126 903
- FR-A- 747 800
- US-A- 2 940 439
- US-A- 4 126 116
- US-A- 4 432 334

## Description

La présente invention concerne une grille de cuisson comportant au moins deux panneaux délimités chacun par une armature périphérique et reliés entre eux par des moyens d'articulation permettant leur juxtaposition et leur superposition.

De telles grilles de cuisson, désignées ci-après par "doubles grilles", sont couramment utilisées pour le barbecue, la pièce à cuire étant posée sur la grille ouverte, les deux panneaux étant alors côte à côte, ou prise entre les deux panneaux superposés de la grille refermée.

Les deux panneaux sont ainsi articulés de manière à pouvoir effectuer une rotation relative de 180°. En l'absence de butée, la rotation peut aller jusqu'à 360°, et les panneaux sont alors superposables dans les deux sens.

Les moyens d'articulation utilisés dans les doubles grilles sont généralement des anneaux fermés, qui interdisent de désolidariser les deux panneaux articulés. Or, il est des cas où l'utilisation d'une grille simple peut être préférée, par exemple si la pièce à cuire n'est pas importante, et au moyen du nettoyage.

On connaît, par le document FR 747 800, des grilles de cuisson comportant deux panneaux délimités chacun par une armature périphérique et reliés entre eux par des moyens d'articulation permettant leur juxtaposition et leur superposition.

Ces moyens d'articulation sont constitués :
- d'une paire de crochets fixée sur un côté de l'armature d'un premier panneau, et
- d'une tige en fer possédant deux méplats, fixée par deux extensions sur un côté de l'armature du deuxième panneau.

L'ouverture des crochets est telle que seuls les méplats peuvent y passer, les méplats étant conformés de telle sorte que leur coulissement dans l'ouverture des crochets se fait quand les deux panneaux forment, entre eux, un angle proche de 90°.

Cependant, de telles grilles sont facilement dissociables par une simple translation des deux panneaux quand ils forment cet angle proche de 90°.

L'invention se propose donc de réaliser une double grille dont les panneaux articulés peuvent être dissociés de manière à constituer des grilles simples en tant que de besoin et dont l'association est fiable et sûre.

Suivant l'invention comme caractérisée dans les revendications, la grille du type précitée, comportant au moins deux panneaux délimités chacun par une armature périphérique et reliés entre eux par des moyens d'articulation permettant leur juxtaposition et leur superposition, les moyens d'articulation d'un des deux panneaux étant une paire de crochets fixée sur un côté de l'armature périphérique de ce panneau, est caractérisée en ce que les moyens d'articulation de l'autre panneau sont constitués par une deuxième paire de crochets fixée sur un côté de l'armature périphérique de cet autre panneau, les deux paires de crochets étant conformées de façon que les panneaux soient dissociables.

Les moyens d'articulation sont ainsi des moyens permettant de solidariser ou de désolidariser les grilles simples composant la grille double à volonté.

Lesdits crochets de chaque panneau sont des anneaux ouverts sur une portion juste suffisante pour pouvoir venir en prise sur l'armature périphérique de l'autre panneau, l'extrémité libre du crochet formant un retour susceptible de constituer une surface d'appui pour la grille.

Outre le fait qu'elle confère à la grille une base d'appui, cette configuration à crochets enrobants évite une désolidarisation fortuite des deux panneaux et assure ainsi une plus grande liberté à l'ouverture et à la fermeture de la double grille.

Avantageusement, lesdits anneaux ouverts sont de forme oblongue, allongée perpendiculairement à la surface des panneaux, pour permettre une juxtaposition rapprochée mais une superposition avec écartement des deux panneaux.

Enfin, il est préférable d'éviter un décalage entre les deux panneaux, que ce soit en juxtaposition ou en superposition. La réponse à cette exigence est apportée de manière privilégiée par l'invention qui, sans moyens de fixation supplémentaires, prévoit que la paire de crochets de l'un des panneaux vient sensiblement en butée contre la paire de crochets de l'autre panneau, interdisant ou du moins limitant le glissement relatif entre les deux panneaux.

D'autres particularités et avantages de l'invention apparaîtront encore dans la description qui suit.

Aux dessins annexés, donnés à titre d'exemples non limitatifs:
- la figure 1 est une vue en perspective d'une grille de cuisson conforme à l'invention;
- les figures 2 à 5 sont des vues en perspective, montrant les étapes successives de montage, d'ouverture et de fermeture de la double grille, dans un mode de réalisation préféré de l'invention, avec des crochets enrobants.

En référence aux figures, la double grille en acier inoxydable se compose de deux plateaux A, B et A', B', de forme générale sensiblement identique, formant chacun une grille simple délimitée par une armature périphérique tubulaire 1 sur laquelle sont soudées des tiges métalliques parallèles 2 destinées à venir en contact avec une pièce à cuire non représentée.

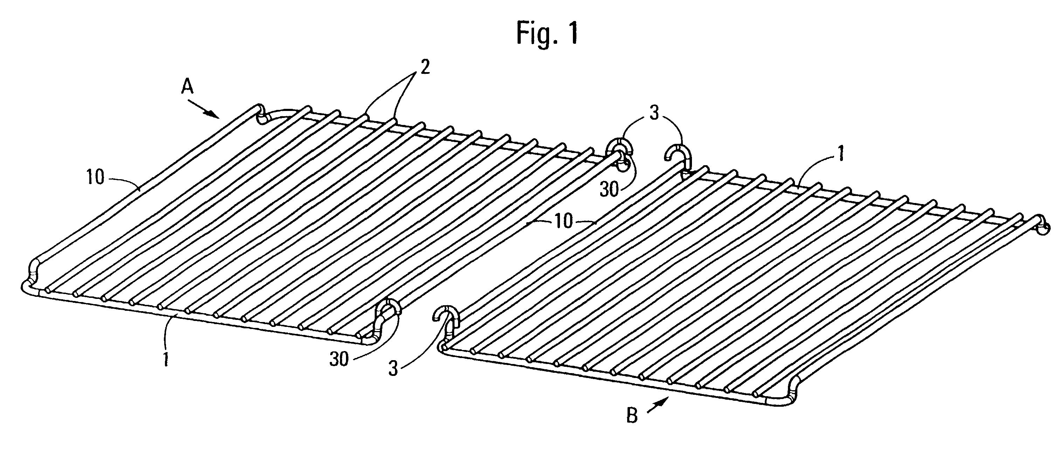

Dans la version de la figure 1, l'armature 1 présente, sur chacun des deux côtés parallèles aux tiges 2 un bord surélevé 10 permettant en particulier d'assurer un écartement minimum entre les panneaux A et B superposés. Les bords 10 destinés à venir en regard pour l'articulation des deux panneaux portent chacun, soudée à leurs deux extrémités, une paire de crochets 3, en saillie du même côté du panneau - c'est-à-dire du côté destiné à être contact avec les aliments -, orientés vers l'extérieur du panneau, et leur extrémité libre 30 descendant un peu en-dessous du bord 10.

L'écartement entre les crochets du panneau B est légèrement inférieur à celui des crochets du panneau A, de manière à ce qu'en position, les crochets de B soient sensiblement en butée contre les crochets de A. Pour constituer la grille double articulée, il suffit de rapprocher les panneaux A et B placés en position horizontale, et de soulever légèrement le panneau B par son bord 10, de manière que ses crochets 3 recouvrent le bord 10 correspondant du panneau A.

Ce type d'articulation permet la rotation nécessaire de 180°d'un panneau par rapport à l'autre. En position superposée, chaque crochet de chaque paire forme, avec le crochet en vis-à-vis de l'autre paire, un anneau quasi-complet en perspective.

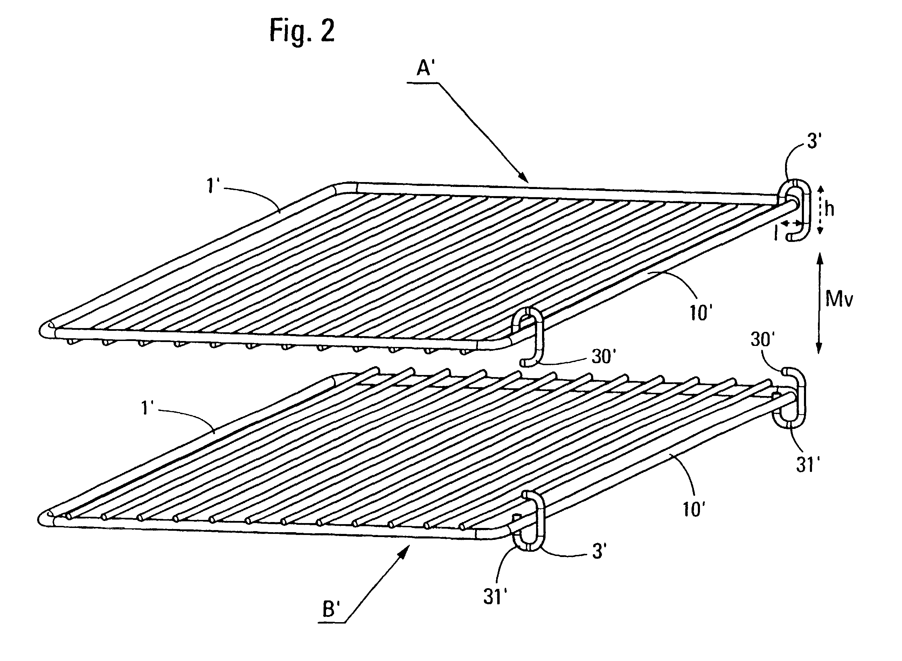

Dans le mode de réalisation préféré des figures 2 à 5, l'armature périphérique 1' de chaque panneau A' et B' s'étend sur la totalité de son pourtour sensiblement dans le même plan, sans partie surélevée comme à la figure 1. Les bords 10' des panneaux A' et B' respectivement, destinés à venir en regard pour leur articulation, sont pourvus à leurs extrémités d'une paire de crochets 3' identiques, soudés sur la même face et orientés dans le même sens pour chaque panneau A', B'. Comme dans le mode de réalisation de la figure 1, les panneaux A' et B' sont donc sensiblement identiques, sauf pour l'écartement des crochets de chaque paire, celui des crochets du panneau B' étant inférieur à celui des crochets du panneau A', de sorte que les crochets de B' viennent sensiblement en butée contre les crochets de A' pour empêcher un glissement relatif des deux panneaux associés.

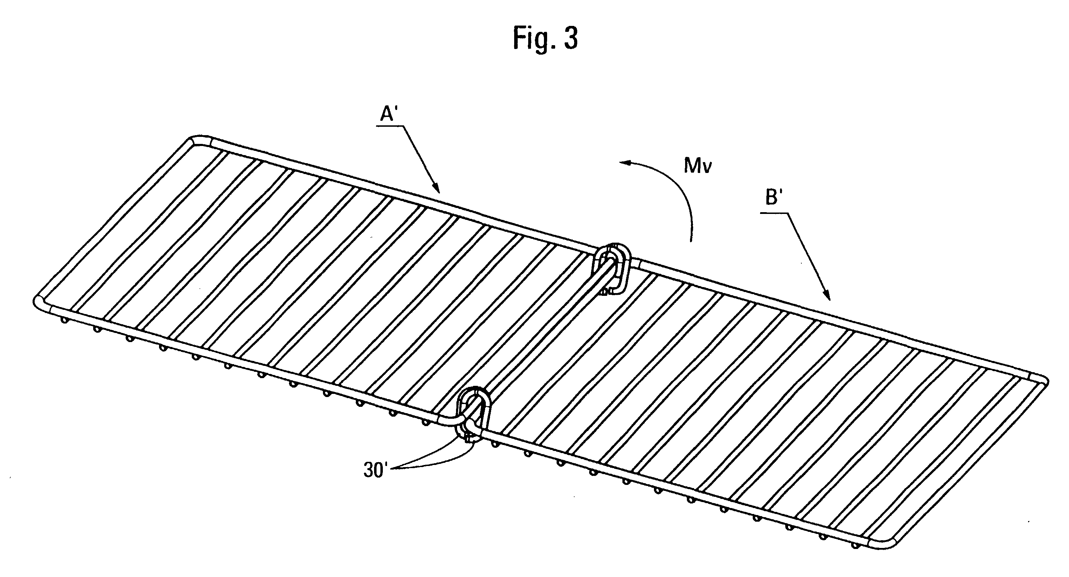

Les crochets 3' sont recourbés pour former des anneaux ouverts sur moins d'un quart de leur pourtour. Cette ouverture est suffisante pour permettre le passage du bord 10' de l'armature du panneau destiné à venir en prise avec lesdits crochets 3'. L'extrémité libre 30' fait un retour de manière à former un crochet 3' enrobant, et qui présente en outre l'avantage, du fait de sa courbe, d'une agressivité moindre en cas de choc accidentel sur un objet ou une personne. Enfin, comme cela apparaît dans la position de la figure 3, ce retour d'extrémité 30' constitue une surface d'appui centrale pour la double grille, laquelle repose à ses deux extrémités opposées sur des supports du barbecue, non représentés.

Dans les deux modes de réalisation (figure 1 et figures 2 à 5), la largeur 1 des crochets 3 et 3' est prévue pour permettre une juxtaposition rapprochée des panneaux A, B, et A', B' respectivement. Autrement dit, cette largeur est légèrement supérieure au double du diamètre du bord 10, 10'. Dans la version de la figure 1, les bords surélevés 10 assurent l'écartement minimum des panneaux superposés, la hauteur des crochets 3 augmentant l'amplitude d'écartement jusqu'à une valeur maximum.

Dans la variante des figures 2 à 5, les anneaux ouverts 3' sont de forme oblongue, allongée perpendiculairement à la surface des panneaux A', B', et c'est leur hauteur h qui définit l'écartement maximum entre les panneaux superposés.

La succession des figures 2 à 5 illustre la simplicité de la cinématique du système:

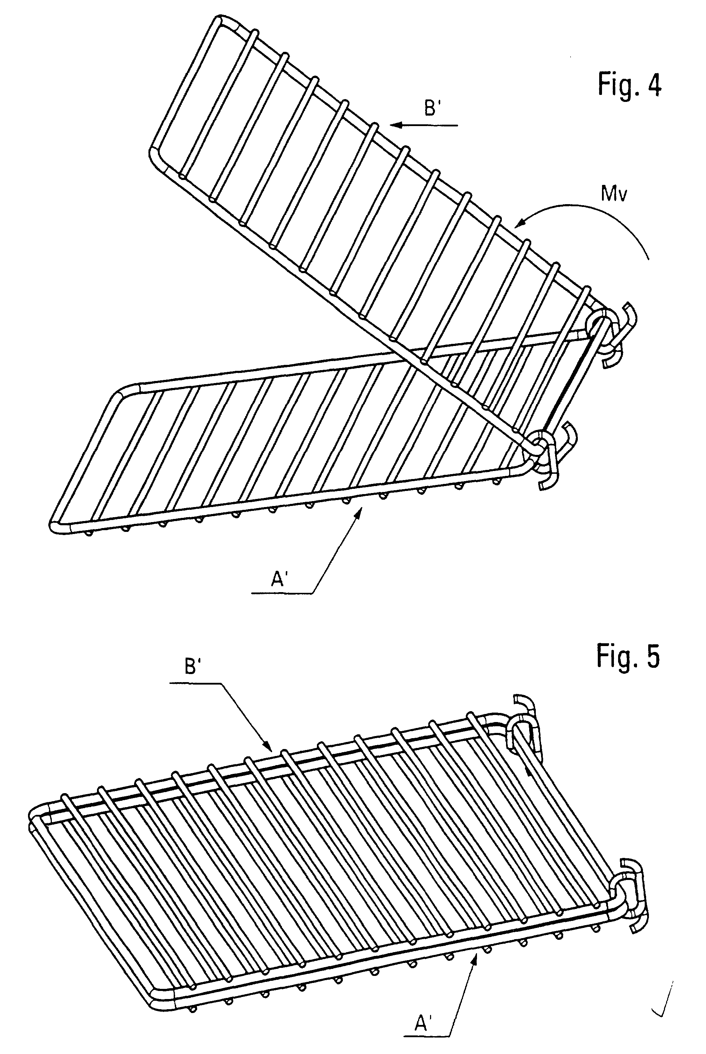

En référence à la figure 2, le montage de la grille double se fait en superposant les panneaux A' et B', les paires de crochets 3' se faisant face par leurs extrémités libres 30'. Par un mouvement simple et naturel, l'utilisateur fait glisser, dans un sens puis dans l'autre, le panneaux supérieur sur le panneau inférieur; le bord 10' du panneau supérieur est d'abord placé sur les retours 30' du panneau inférieur pour que les anneaux 30' du panneau supérieur viennent en prise sur le bord 10' du panneau inférieur, puis les anneaux 30' du panneau inférieur viennent en prise sur le bord 10' du panneau supérieur. Les deux panneaux se trouvent dès lors articulés grâce aux crochets enrobants 3', lesquels forment en perspective un anneau complet, tel que représenté à la figure 5. De la position fermée, on ouvre la grille double en faisant pivoter l'un des deux panneaux A'et B' de 180°. Le passage de la position superposée de la figure 2 à la position juxtaposée de la figure 3 s'est fait par une rotation du panneau inférieur B'. Une rotation supplémentaire de 180°du panneau B' peut être effectuée pour replier ce dernier sur le panneau A', comme montré aux figures 4 et 5.

Il apparaît ainsi que la rotation relative d'un panneau par rapport à l'autre peut être de 360°, sans désolidarisation des panneaux, ce qui permet d'utiliser la grille double dans les deux sens, tant en position ouverture (juxtaposée) que fermée (superposée). En effet, les crochets 3' sont soudés sur les bords 10' de manière à faire saillie sur les deux faces de la grille; dans un sens ou dans l'autre, la grille dispose ainsi d'une surface d'appui, centrale en position ouverte, latérale en position fermée, matérialisée par les retours 30', par les parties 31' opposées aux retours 30' ou par une combinaison des deux (comme à la figure 5).

Pour désolidariser les panneaux A' et B', la grille doit être fermée, les panneaux étant superposés, comme à la figure 2. Il suffit de soulever légèrement le panneau supérieur par son bord opposé au bord 10', de le tirer pour le dégager d'abord des anneaux 3' du panneau inférieur, puis de le repousser pour que son bord 10' passe au-dessus des retours 30' du panneau inférieur et ainsi dégager ce dernier des anneaux 3' du panneau supérieur.

En particulier, la grille de cuisson pourrait être une grille multiple, comportant par exemple un troisième panneau articulé et dissociable, juxtaposable et superposable. Il suffirait, pour cela, de prévoir un panneau central portant deux paires de crochets sur deux bords opposés destinés à venir en prise avec les bords d'un premier et d'un troisième panneaux respectivement.

D'autre part, il va de soi que le mode de réalisation des crochets ne se limite pas à des fils recourbés et soudés, mais peut consister en des attaches équivalentes telles que des pièces en tôle pliée fixées par tous moyens appropriés.

L'invention permet ainsi la réalisation d'une grille double ou multiple, composée uniquement de panneaux articulés entre eux, dissociables et recomposables à volonté, sans pièces supplémentaires tels que charnière ou anneaux fermés et sans ajustement précis. Cette versatilité de la grille, alliée à la simplicité de la structure et à une bonne stabilité des panneaux dans leur position relative, en fait un produit pratique, maniable et sûr.

## Revendications

1. Grille de cuisson comportant au moins deux panneaux (A,B;A',B') délimités chacun par une armature périphérique (1,1') et reliés entre eux par des moyens d'articulation permettant leur juxtaposition et leur superposition, les moyens d'articulation étant constitués par deux paires de crochets (3,3') conformées de façon que les panneaux (A,B;A',B') soient dissociables, chaque panneau (A,B;A',B') ayant une paire de crochets (3,3') fixée sur un côté (10,10') de l'armature périphérique (1,1') correspondante, **caractérisée en ce que** chaque crochet (3,3') est un anneau ouvert qui présente une extrémité libre (30,30') et qui est adapté à venir en prise avec l'armature périphérique (1,1') du panneau (B,A;B',A') auquel il n'est pas fixé.

2. Grille de cuisson selon la revendication 1, **caractérisée en ce que** l'extrémité libre (30') de chaque crochet (3') forme un retour (30') susceptible de constituer une surface d'appui pour la grille.

3. Grille de cuisson selon la revendication 1 ou 2, **caractérisée en ce que** chaque anneau (3') est ouvert sur une portion juste suffisante pour pouvoir venir en prise avec l'armature périphérique (1,1') du panneau (B,A;B',A') auquel il n'est pas fixé.

4. Grille de cuisson selon l'une des revendications 1 à 3, **caractérisée en ce que** les anneaux ouverts (3') sont de forme allongée perpendiculairement à la surface des panneaux, leur largeur (1) assurant une juxtaposition rapprochée des deux panneaux, (A',B') et leur hauteur (h) permettant une superposition avec écartement des deux panneaux (A',B').

5. Grille de cuisson selon l'une des revendications 1 à 4, **caractérisée en ce que** la paire de crochets (3, 3') de l'un des panneaux (A,B;A',B') vient sensiblement en butée contre la paire de crochets (3,3') de l'autre panneau (B,A;B',A'), de manière à interdire ou limiter le glissement relatif entre les deux panneaux.

## Patentansprüche

1. Brennrost, welches wenigstens zwei durch eine Außenberandung abgegrenzte Gitter (A, B; A', B') aufweist, die miteinander über Gelenkvorrichtungen verbunden sind, die ihre Aneinanderreihung oder ihr Übereinanderlegen ermöglichen, wobei die Gelenkvorrichtungen aus zwei Paar Haken (3, 3') gebildet sind, die so ausgebildet sind, dass die Gitter (A, B; A', B') trennbar sind, wobei jedes Gitter (A, B; A', B') ein Paar Haken (3, 3') aufweist, befestigt an einer Seite (10, 10') der entsprechenden Außenberandung (1, 1'), **dadurch gekennzeichnet, dass** jeder Haken (3, 3') ein offener Ring ist, der ein freies Ende (30, 30') aufweist und der angepasst ist, in Eingriff mit der Außenberandung (1, 1') des Gitters (B, A; B', A') zu kommen, an welchem er nicht befestigt ist.

2. Brennrost gemäß Anspruch 1, **dadurch gekennzeichnet, dass** das freie Ende (30') des Hakens (3') einen Rücksprung (30') bildet, der geeignet ist, eine Stützfläche für den Rost zu bilden.

3. Brennrost gemäß Anspruch 1 oder 2, **dadurch gekennzeichnet, dass** jeder Ring (3') geöffnet ist auf einem knappen Abschnitt, der ausreichend ist, um mit der Außenberandung (1, 1') des Gitters (B, A; B', A') ineinanderzugreifen, an dem er nicht befestigt ist.

4. Brennrost gemäß einem der Ansprüche 1 bis 3, **dadurch gekennzeichnet, dass** die geöffneten Ringe (3') eine längliche, senkrecht zur Oberfläche der Gitter gestreckte Form haben, ihre Weite (I) eine nahe Aneinanderreihung der beiden Gitter (A', B') ermöglicht und ihre Höhe (h) ein Übereinanderlegen mit Abstand zwischen den beiden Gittern (A', B') ermöglicht.

5. Brennrost gemäß einem der Ansprüche 1 bis 4, **dadurch gekennzeichnet, dass** das Paar Haken (3, 3') des einen der Gitter (A, B; A', B') praktisch in Anschlag zu dem Paar Haken (3, 3') des anderen Paares (B, A, B', A') kommt, um ein relatives Gleiten zwischen den beiden Gittern zu begrenzen oder zu unterbinden.

## Claims

1. A cooking grill comprising at least two panels (A, B; A', B') each defined by a peripheral frame (1, 1') and interconnected by articulation means allowing the panels to be juxtaposed and superimposed, the articulation means comprising two pairs of hooks (3, 3') so shaped that the panels (A, B; A', B') can be disconnected, each panel (A, B; A', B') having a pair of hooks (3, 3') fixed on one side (10, 10') of the corresponding peripheral frame (1, 1'), **characterised in that** each hook (3, 3') is an open ring which has a free end (30, 30') and which is adapted to engage the peripheral frame (1, 1') of the panel (B, A; B', A') to which it is not fixed.

2. A cooking grill according to claim 1, **characterised in that** the free end (30') of each hook (3') forms a return (30) adapted to form a support surface for the grill.

3. A cooking grill according to claim 1 or 2, **characterised in that** each ring (3') is open over a portion just sufficient to be able to engage the peripheral frame (1, 1') of the panel (B, A; B', A') to which it is not fixed.

4. A cooking grill according to any one of claims 1 to 3, **characterised in that** the open rings (3') are of elongate shape perpendicularly to the surface of the panels, their width (1) ensuring close juxtaposition of the two panels (A', B') and their height (h) allowing superimposition with a gap between the two panels (A', B').

5. A cooking grill according to any one of claims 1 to 4, **characterised in that** the pair of hooks (3, 3') on one of the panels (A, B; A', B') substantially abuts the pair of hooks (3, 3') of the other panel (B, A; B', A') so as to prevent or limit relative sliding between the two panels.
